# EUROPÄISCHE PATENTSCHRIFT

(11) **EP 2 049 383 B1**
(45) Veröffentlichungstag und Bekanntmachung des Hinweises auf die Patenterteilung: **16.12.2009**
(21) Anmeldenummer: 07765532.2
(22) Anmeldetag: 21.06.2007
(51) Int. Cl.: B62D 5/04, F16C 27/06

(54) **SERVOLENKUNG**
SERVO STEERING
DIRECTION ASSISTÉE

(30) Priorität: 10.08.2006 DE 102006037479
(43) Veröffentlichungstag der Anmeldung: 22.04.2009
(73) Patentinhaber: ZF-Lenksysteme GmbH, 73527 Schwäbisch Gmünd (DE); Bareis, Helmut, 73569 Eschach (DE); Budaker, Martin, 73540 Heubach (DE); Hetzel, Oliver, 73550 Waldstetten (DE)
(72) Erfinder: BAREIS, Helmut, 73569 Eschach (DE); BUDAKER, Martin, 73540 Heubach (DE); HETZEL, Oliver, 73550 Waldstetten (DE)
(86) Internationale Anmeldenummer: PCT/EP2007/056182
(87) Internationale Veröffentlichungsnummer: WO 2008/017541

(56) Entgegenhaltungen:
- EP-A- 1 571 067
- DE-A1- 10 202 483
- DE-A1-102004 034 701
- DE-U- 1 947 337
- JP-A- 2003 220 959

## Beschreibung

Die Erfindung betrifft eine Servolenkung, insbesondere für ein Kraftfahrzeug, mit einem Servomotor der ein axial verlagerbares Bauelement über eine in einem Gestell drehbar, aber axial unverschiebbar gelagerte Mutter antreibt, nach dem Oberbegriff des Anspruchs 1

Die DE 103 10 492 A1 beschreibt eine Servolenkung, insbesondere für Kraftfahrzeuge, mit einem als Elektromotor gebildeten Servomotor, der ein als Schubstange ausgebildetes, axial verlagerbares Bauelement über eine, in einem als Lenkungsgehäuse gebildeten Gestell drehbar, aber axial unverschiebbar gelagerte Mutter antreibt. Der Servomotor und die Schubstange und die Mutter sind mittels eines exzentrischen Lagerringes derart gelagert, dass der Achsabstand zwischen der Motorwelle des Servomotors und der Schubstange variierbar ist, wodurch eine einfache, rasche Montage der Servolenkung ermöglicht ist.

Aus der gattungsgemäßen DE 102 02 483 A1 ist eine elektrische Lenkvorrichtung bekannt, die aus einer Zahnstange, die mit einer Lenkspindel verbunden ist, einem Motor zum Unterstützen einer Lenkkraft mit einem Rotor, der koaxial auf der Zahnstange angeordnet ist, einem Kugelumlaufspindelmechanismus, bei dem Kugeln zwischen eine Mutter, die mit dem Rotor verkeilt ist, und eine Schraube gelegt sind, die auf der Zahnstange gebildet ist, und einem Gehäuse, das insgesamt näherungsweise zylindrisch gestaltet ist, besteht. Die Mutter des Kugelumlaufspindelmechanismus ist drehbar durch ein Lager im Inneren des Muttergehäuseabschnittes gelagert.

In der DE 19 47 337 U ist ein elastisches Wälzlager dargestellt, welches eine axiale Beweglichkeit und eine axiale Federung mit Rückstellkraft aufweist.

Ein Wälzlager mit einem Lageraußenring und einem Lagerinnenring, wobei der Lageraußenring und /oder der Lagerinnenring jeweils zwischen mindestens einem Dämpfungselement angeordnet ist, ist aus der DE 10 2004 034 701 A1 bekannt.

Die EP 1 571 067 A1 offenbart die elastische Lagerung einer Schneckenwelle die koaxial die Motorwelle eines Servomotors umgreift.

Die Lenkgetriebegehäuse der bekannten Servolenkungen und die bekannten elastischen Lager in Sicht auf ein Kugelumlaufspindelmechanismus weisen einen erhöhten Bauraumbedarf auf und es besteht Optimierungsbedarf in Bezug auf deren Montagezeit.

Der Erfindung liegt die Aufgabe zugrunde, eine Servolenkung zu schaffen, die bei geringem Bauraumbedarf einfach zu montieren und zudem eine Schiefstellung der Schubstange ohne Verspannung der Schubstange in dem Gestell ermöglicht.

Die Aufgabe wird mit einer Servolenkung mit den Merkmalen des Anspruchs 1 gelöst.

Dadurch dass das die Mutter in dem Gestell haltende Lager als Festlager und Radiallager gebildet ist, das sich mit seinem Innenring unmittelbar an der Mutter und mit seinem Außenring unmittelbar an dem Gestell abstützt und ein Element mit elastomeren Eigenschaften, das auf eine Scheibe aufvulkanisiert ist zwischen dem Radiallager und dem Gestell angeordnet ist, ist durch den Entfall des exzentrischen Lagerrings insbesondere der radiale Bauraum der Servolenkung verringert und zudem ein sicher und rasch zu montierendes Element mit geringstem Bauraum geschaffen, das zudem eine Schiefstellung des verlagerbaren Bauelements ermöglicht.

Bevorzugte Ausführungen ergeben sich aus den Unteransprüchen.

In einem besonders bevorzugten Ausführungsbeispiel der Servolenkung liegt die Scheibe des mindestens einen Elements mit elastomeren Eigenschaften oder Dämpfungselements wenigstens teilweise, bevorzugt ganz an axialen Stirnflächen des Außenringes und/oder Innenringes des Radiallagers an. Es ragt bevorzugt um den ganzen Umfang des Radiallagers. Um eine Schwenkbarkeit des Radiallagers zu ermöglichen bzw. zu verbessern, ist es zweckmäßig, eine konvexe Wölbung an dem Außenumfang des Außenringes vorzusehen. Außerdem ist es möglich, dass die Mutter, auf welcher der Innenring sitzt, eine konvexe Wölbung aufweist. Durch die konvexe Wölbung des Außenumfangs des Außenrings und/oder der Mutter lässt sich eine Freistellung des Radiallagers und eine besonders gute Verschwenkbarkeit der Mutter und des axial verlagerbaren Bauelements erreichen. Bei Biegemomentbeanspruchung des axial verlagerbaren Bauelements kann ein Verspannen des Systems - axial verlagerbares Bauelement - Radiallager - Gestell - vermieden werden. Ist an jeder Stirnseite des bevorzugt als Rillenkugellager oder Vierpunktlager gebildeten Radiallagers ein Element mit elastomeren Eigenschaften vorgesehen, so ist bei wechselnden Lasten eine axiale und radiale Dämpfung sowie die Durchführung und Dämpfung der Schwenkbewegung des axial verlagerbaren Bauelements möglich.

Durch die Aufvulkanisierung des Elements mit elastomeren Eigenschaften auf eine bevorzugt aus Metall gebildete Scheibe oder Ringes lässt sich das Element leicht handhaben und klein bauen.

Aufgrund der guten Dämpfungseigenschaften kann das Element mit elastomeren Eigenschaften aus einem Elastomer oder einem Kunststoff gebildet sein. Es kann auch zweckmäßig sein, eine Metallfeder, beispielsweise eine Wellfeder oder Tellerfeder vorzusehen.

Das axial verlagerbare Bauelement, welches in an sich bekannter Weise über Spurstangen und Radlenkhebel mit lenkbaren Rädern des Kraftfahrzeugs verbunden ist, ist bevorzugt als Spindel oder Zahnstange mit einem Gewindeabschnitt um die als Kugelmutter gebildete Mutter axial unverschieblich gebildet. Es ist Teil einer elektrischen oder hydraulischen Hilfskraftlenkung, in der das Gestell ein Lenkgetriebegehäuse für ein Kugelmutter-Spindelgetriebe oder Kugelmutter-Hydrogetriebe darstellt. Vorzugsweise ist der Servomotor als Elektromotor gebildet, dessen Motorwelle drehfest mit einer Riemenscheibe verbunden ist und einen Riemen aufweist, der auf einer drehfest auf der Mutter festgelegten Riemenscheibe abläuft. Der Riemen zur Verbindung der beiden Riemenscheiben ist bevorzugt ein Zahnriemen, kann aber auch ein Keilriemen oder Keilrippenriemen sein.

Zur Einstellung der Riemenspannung ist der Servomotor relativ zu der Längsachse des axial verlagerbaren Bauelements und der Mutter radial verschiebbar und fixierbar ausgeführt.

Die Erfindung wird nun näher anhand zweier Ausführungsbeispiele beschrieben und anhand der beiliegenden Zeichnung wiedergegeben.
- Fig. 1: zeigt einen teilweisen Längsschnitt durch ein Lenkgetriebe einer elektrischen Servolenkung.

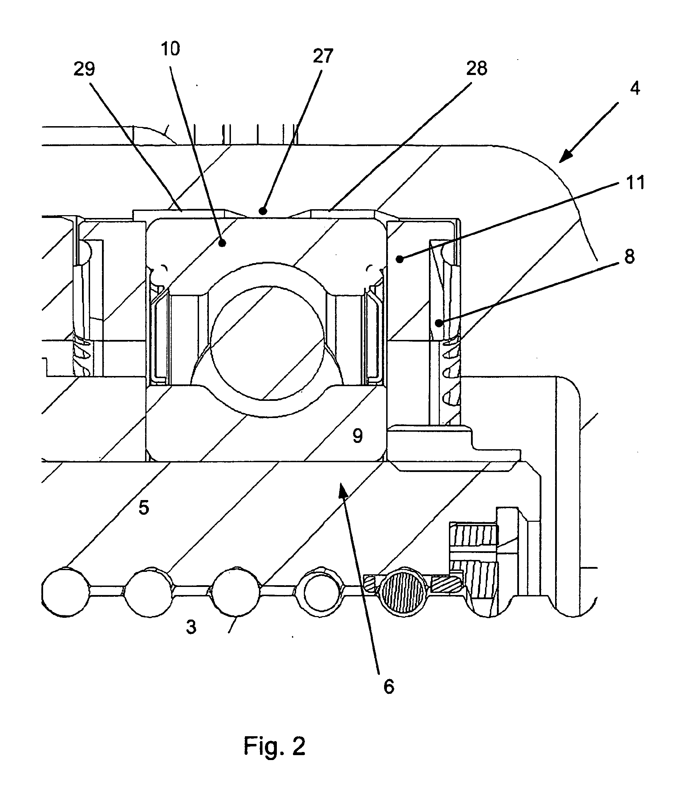

- Fig. 2: zeigt einen weitere Ausführungsform in einem vergrößerten Längsschnitt eines Lenkgetriebes

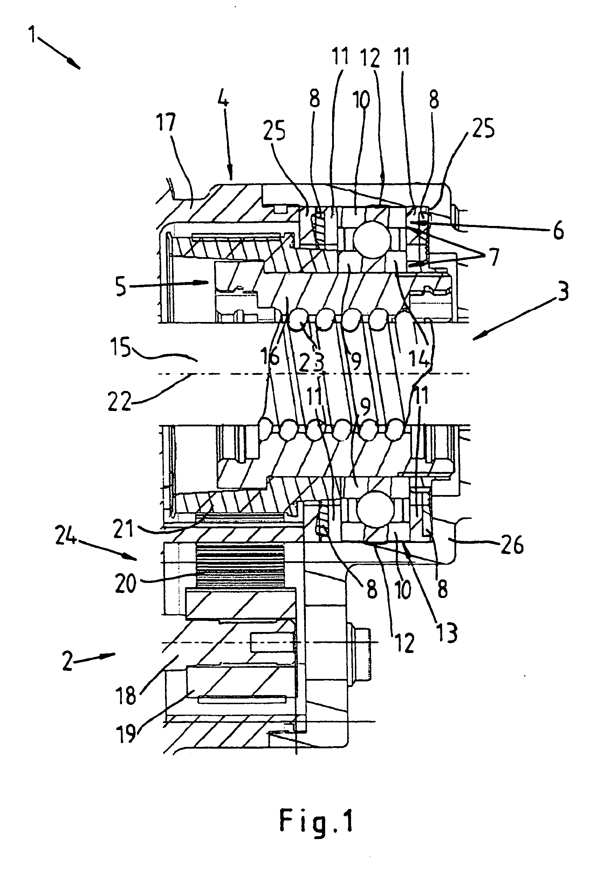

In Fig. 1 ist ein teilweiser Längsschnitt durch ein als Lenkgetriebegehäuse 17 gebildetes Gestell 4 einer elektrischen Servolenkung 1 gezeigt. Ein elektrischer Servomotor 2 dient dabei zur Bereitstellung einer Lenkhilfskraft auf ein als Spindel 15 gebildetes, in dem Lenkgehäuse 17 axial verlagerbar gelagertes Bauelement 3. Die Spindel 15 ist über ein Kugelgewindetrieb, bestehend aus einem Kugelgewinde 23 zwischen der Spindel 15 und einer Mutter 5, die um die Spindel 15 rotierbar angeordnet ist, mit einem Zahnriemengetriebe 24 mit dem Servomotor 2 verbunden.

Das Zahnriemengetriebe besteht aus einer Riemenscheibe 19, die auf einer Motorwelle 18 des Servomotors 2 festgelegt ist und aus einer Riemenscheibe 21, die auf der als Kugelmutter 16 gebildeten Mutter 5 festgelegt ist. Ein als Zahnriemen in dem gezeigten Ausführungsbeispiel gebildeter Riemen 20 verbindet die Riemenscheiben 19, 21. Zur Aufgabe einer Vorspannung auf den Zahnriemen lässt sich nach der Montage des Zahnriemengetriebes und des Kugelgewindetriebs der Servomotor 2 radial zu einer Längsachse 22 des axial verlagerbaren Bauelements 3 verschieben und in seiner Position fixieren. Die Kugelmutter 16 ist axial und radial über einen Innenring 9 und Außenring 10 eines Radiallagers 6, das als Rillenkugellager in dem gezeigten Ausführungsbeispiel gebildet ist und axial zwischen zwei Anschlägen 25 in einem Gehäusedeckel 26 des Lenkgetriebegehäuses 17 formschlüssig festgelegt ist, gelagert.
Auf die Spindel 15 werden im Betrieb der Servolenkung 1 Spurstangenkräfte, die abhängig von der Einfederung und weiterer geometrischer und fahrdynamischer Einflüsse und Kräfte an gelenkten Rädern des Kraftfahrzeugs sind, Biegemomente und Querkräfte aufgebracht. Um zwar ein minimales Axialspiel der Spindel 15 in dem Lenkgetriebegehäuse 17 zu gewährleisten aber ein Verklemmen der Spindel 15 unter dem Einfluss der genannten Kräfte zu vermeiden, ist das Radiallager 6 mit einem Lagerring 7, wie einem Außenring 10 des Radiallagers 6 über je ein ringförmiges Element 8 mit elastomeren Eigenschaften an den ringförmigen Anschlägen 25 abgestützt.

Die Elemente 8 mit elstomeren Eigenschaften sind in dem gezeigten Ausführungsbeispiel auf Metallscheiben 11 aufvulkanisierte Gummiringe mit einer größeren Materialdicke im Bereich des Außenrings 10 des Radiallagers 6 als im Bereich der Wälzkörper des Radiallagers 6. Die Metallscheiben 11 liegen auf dem Umfang der Kugelmutter 16 auf und lassen sich einfach durch Aufschieben auf deren Umfangsfläche montieren.

Eine Schwenkbeweglichkeit der Spindel 15 kann durch eine geeignete geometrische Gestaltung der das Radiallager 6 umgebenden Bauteile oder durch die Bauteile des Radiallagers 6 selbst ermöglicht werden. Der Außenring 10 des Radiallagers 6 weist an seinem Außenumfang 13 eine um dessen Umfang reichende konvexe Wölbung 12 auf, die eine Schwenkbeweglichkeit der Spindel 15 ermöglicht.

Eine weitere Ausführungsform ist stark vergrößert in einem Längsschnitt einer erfindungsgemäßen Servolenkung dargestellt.
Das Gestell 4 weist im Bereich des Radiallagers 6 einen Fortsatz 27 auf. Um die Herstellungskosten zu verringern ist der Fortsatz 6 stegförmig ausgebildet. Der stegförmige Fortsatz 6 erstreckt sich radial über den inneren Bereich des Gestells 4. Die axiale Position des Fortsatzes 6 wird durch die axiale Position des Außenrings 10 festgelegt, wobei es von Vorteil ist, den Fortsatz 6 mittig zum Außenring 10 auszurichten.
Des weiteren ist vorgesehen, den Fortsatz 27 dadurch auszubilden, indem zwei frei geschnittene Bereiche 28,29 in das Material des Gestells 4, im Bereich des Außenrings 10 eingebracht werden. Dies hat den Vorteil, dass der Fortsatz auf besonders einfache und kostengünstige Weise hergestellt werden kann und das Gestell 4 ebenso zur Aufnahme der Scheibe 11 beziehungsweise des elastomeren Elements 11 vorbereitet ist.

### Bezugszeichenliste

- - 1: Servolenkung
- - 2: Servomotor
- - 3: Bauelement, axial verlagerbar
- - 4: Gestell
- - 5: Mutter
- - 6: Radiallager
- - 7: Lagerring
- - 8: Element mit elastomeren Eigenschaften
- - 9: Innenring
- - 10: Außenring
- - 11: Scheibe
- - 12: Wölbung, konvex
- - 13: Außenumfang
- - 14: Rillenkugellager
- - 15: Spindel
- - 16: Kugelmutter
- - 17: Lenkgetriebegehäuse
- - 18: Motorwelle, v. 2
- - 19: Riemenscheibe
- - 20: Riemen
- - 21: Riemenscheibe
- - 22: Längsachse
- - 23: Kugelgewinde
- - 24: Zahnriemengetriebe
- - 25: Anschlag
- - 26: Gehäusedeckel
- -27: Fortsatz
- - 28,29: freigestellte Bereiche

## Patentansprüche

1. Servolenkung, insbesondere für ein Kraftfahrzeug, mit einem Servomotor (2), der ein axial verlagerbares Bauelement (3) über eine in einem Gestell (4) drehbar, aber axial unverschiebbar gelagerte Mutter (5) antreibt, wobei die Mutter (5) in einem Radiallager (6) in dem Gestell (4) gelagert ist und ein Lagerring (7) oder Träger des Radiallagers(6) unter Zwischenlage eines Elements (8) mit elastomeren Eigenschaften an dem Gestell (4) abgestützt ist, **dadurch gekennzeichnet, dass** das Radiallager (6) sich mit seinem Innenring (9) unmittelbar an der Mutter (5) und mit seinem Außenring (10) unmittelbar mittels eines Fortsatzes (27,12) an dem Gestell (4) abstützt und das Element (8) mit elastomeren Eigenschaften auf eine Scheibe (11) aufvulkanisiert ist.

2. Servolenkung nach Anspruch 1, **dadurch gekennzeichnet, dass** der Außenring (10) des Radiallagers (6) sich unter Zwischenlage des Elements (8) mit elastomeren Eigenschaften an dem Gestell (4) abstützt.

3. Servolenkung nach einem der Ansprüche 1 oder 2, **dadurch gekennzeichnet, dass** der Außenring (10) eine konvexe Wölbung (12) an seinem Außenumfang (13) aufweist.

4. Servolenkung nach einem der Ansprüche 1 bis 3, **dadurch gekennzeichnet, dass** die Mutter (5), auf welcher der Innenring (9) sitzt, eine konvexe Wölbung im Axialbereich des Radiallagers (6) aufweiset.

5. Servolenkung nach einem der Ansprüche 1 bis 3, **dadurch gekennzeichnet, dass** das Gestell (4) einen stegförmigen Fortsatz (27) aufweist, der in einem Bereich des Außenrings (10) mit diesem zur Auflage kommt.

6. Servolenkung nach Anspruch 5, **dadurch gekennzeichnet, dass** das Gestell (4) im Bereich des Außenrings (10) freigestellte Bereiche (28,29) aufweist, die den stegförmigen Fortsatz (27) ausbilden.

7. Servolenkung nach einem der Ansprüche 1 bis 6, **dadurch gekennzeichnet, dass** das Element (8) aus einem elastomeren Werkstoff gebildet ist.

8. Servolenkung nach einem der Ansprüche 1 bis 7, **dadurch gekennzeichnet, dass** das Radiallager (6) ein Rillenkugellager (14) oder ein Vierpunktlager ist.

9. Servolenkung nach einem der Ansprüche 1 bis 8, **dadurch gekennzeichnet, dass** zu beiden Seiten des Außenringes (10) Je ein Element (8) mit elastomeren Eigenschaften angeordnet ist.

10. Servolenkung nach einem der Ansprüche 1 bis 9, **dadurch gekennzeichnet, dass** das axial verlagerbare Bauelement (3) eine Spindel (15) oder Zahnstange mit einem Gewindeabschnitt ist, um die eine axial unverschieblich gelagerte Kugelmutter (16) rotiert.

11. Servolenkung nach Anspruch 10, **dadurch gekennzeichnet, dass** das Gestell (4) ein Lenkgetriebegehäuse (17) eines Kugelmutter-Spindetgetriebes oder Kugelmutter-Hydrogetriebes einer elektrischen oder hydraulischen Hilfskraft- oder Fremdkrafdenkung ist.

12. Servolenkung nach einem der Ansprüche 1 bis 11, **dadurch gekennzeichnet, dass** der Servomotor (2) ein Elektromotor ist, der über eine drehfest mit seiner Motorwelle (18) verbundenen Riemenscheibe (19) und einem Riemen (20) eine mit der Mutter (5) drehfest verbundene Riemenscheiben (21) antreibt.

13. Servolenkung nach Anspruch 12, **dadurch** gekenntzeichnet, dass der Servomotor (2) radial zu der Längsachse (22) des axial verlagerbaren Bauelements (3) und der Mutter (5) verschiebbar und fixierbar ist.

## Claims

1. Power steering system, in particular for a motor vehicle, having a servomotor (2) which drives an axially displaceable component (3) via a nut (5) which is mounted rotatably but axially non-displaceably in a frame (4), the nut (5) being mounted in a radial bearing (6) in the frame (4), and a bearing ring (7) or carrier of the radial bearing (6) being supported on the frame (4) with an element (8) having elastomeric properties being placed in between, **characterized in that** the radial bearing (6) is supported by way of its inner ring (9) directly on the nut (5) and by way of its outer ring (10) directly on the frame (4) by means of a projection (27, 12), and the element (8) having elastomeric properties being vulcanized onto a disc (11).

2. Power steering system according to Claim 1, **characterized in that** the outer ring (10) of the radial bearing (6) is supported on the frame (4) with an element (8) having elastomeric properties being placed in between.

3. Power steering system according to either of Claims 1 and 2, **characterized in that** the outer ring (10) has a convex bulge (12) on its outer circumference (13).

4. Power steering system according to one of Claims 1 to 3, **characterized in that** the nut (5), on which the inner ring (9) is seated, has a convex bulge in the axial region of the radial bearing (6).

5. Power steering system according to one of Claims 1 to 3, **characterized in that** the frame (4) has a web-shaped projection (27) which comes into contact with the outer ring (10) in a region of the latter.

6. Power steering system according to Claim 5, **characterized in that**, in the region of the outer ring (10), the frame (4) has exposed regions (28, 29) which form the web-shaped projection (27).

7. Power steering system according to one of Claims 1 to 6, **characterized in that** the element (8) is formed from an elastomeric material.

8. Power steering system according to one of Claims 1 to 7, **characterized in that** the radial bearing (6) is a groove ball bearing (14) or a four point bearing.

9. Power steering system according to one of Claims 1 to 8, **characterized in that** in each case one element (8) having elastomeric properties is arranged on both sides of the outer ring (10).

10. Power steering system according to one of Claims 1 to 9, **characterized in that** the axially displaceable component (3) is a spindle (15) or rack having a threaded section, about which an axially non-displaceably mounted ball nut (16) rotates.

11. Power steering system according to Claim 10, **characterized in that** the frame (4) is a steering gear housing (17) of a ball nut/spindle gear mechanism or ball nut/hydraulic gear mechanism of an electric or hydraulic power assistance steering system or external power assistance steering system.

12. Power steering system according to one of Claims 1 to 11, **characterized in that** the servomotor (2) is an electric motor which drives a belt pulley (21) which is connected in a rotationally fixed manner to the nut (5), via a belt (20) and a pulley wheel (19) which is connected in a rotationally fixed manner to the motor shaft (18) of the said servomotor (2).

13. Power steering system according to Claim 12, **characterized in that** the servomotor (2) can be displaced radially with respect to the longitudinal axis (22) of the axially displaceable component (3) and the nut (5) and can be fixed.

## Revendications

1. Direction assistée, en particulier pour un véhicule automobile, comprenant un servomoteur (2), qui entraîne un élément de construction déplaçable axialement (3) par le biais d'un écrou (5) pouvant tourner dans un bâti (4) mais non déplaçable axialement, l'écrou (5) étant monté dans un palier radial (6) dans le bâti (4) et une bague de palier (7) ou un support du palier radial (6) étant supporté sur le bâti (4) en interposant un élément (8) ayant des propriétés élastomères, **caractérisée en ce que** le palier radial (6) s'appuie avec sa bague interne (9) directement sur l'écrou (5) et avec sa bague externe (10) directement au moyen d'une saillie (27, 12) contre le bâti (4) et l'élément (8) avec des propriétés élastomères est vulcanisé sur un disque (11).

2. Direction assistée selon la revendication 1, **caractérisée en ce que** la bague externe (10) du palier radial (6) s'appuie sur le bâti (4) en interposant l'élément (8) ayant des propriétés élastomères.

3. Direction assistée selon l'une quelconque des revendications 1 ou 2, **caractérisée en ce que** la bague externe (10) présente une courbure convexe (12) sur sa périphérie extérieure (13).

4. Direction assistée selon l'une quelconque des revendications 1 à 3, **caractérisée en ce que** l'écrou (5), sur lequel repose la bague interne (9), présente une courbure convexe dans la région axiale du palier radial (6).

5. Direction assistée selon l'une quelconque des revendications 1 à 3, **caractérisée en ce que** le bâti (4) présente une saillie (27) en forme de nervure, qui vient s'appuyer sur la bague externe (10) dans une région de cette dernière.

6. Direction assistée selon la revendication 5, **caractérisée en ce que** le bâti (4) présente dans la région de la bague externe (10) des zones exposées (28, 29) qui constituent la saillie (27) en forme de nervure.

7. Direction assistée selon l'une quelconque des revendications 1 à 6, **caractérisée en ce que** l'élément (8) est formé d'un matériau élastomère.

8. Direction assistée selon l'une quelconque des revendications 1 à 7, **caractérisée en ce que** le palier radial (6) est un palier rainuré à billes (14) ou un palier à quatre points.

9. Direction assistée selon l'une quelconque des revendications 1 à 8, **caractérisée en ce que** des deux côtés de la bague extérieure (10) est disposé un élément respectif (8) avec des propriétés élastomères.

10. Direction assistée selon l'une quelconque des revendications 1 à 9, **caractérisée en ce que** l'élément de construction déplaçable axialement (3) est une broche (15) ou une crémaillère avec une portion filetée, autour de laquelle tourne un écrou sphérique (16) monté de manière immobile axialement.

11. Direction assistée selon la revendication 10, **caractérisée en ce que** le bâti (4) est un boîtier de direction (17) d'une transmission à broche à écrou à bille ou d'une hydrotransmission à écrou à bille d'une direction assistée ou à force extérieure électrique ou hydraulique.

12. Direction assistée selon l'une quelconque des revendications 1 à 11, **caractérisée en ce que** le servomoteur (2) est un moteur électrique qui, par le biais d'une poulie à courroie (19) connectée manière solidaire en rotation à son arbre de moteur (18) et d'une courroie (20), entraîne une poulie à courroie (21) connectée de manière solidaire en rotation à l'écrou (5).

13. Direction assistée selon la revendication 12, **caractérisée en ce que** le servomoteur (2) peut être déplacé et fixé radialement par rapport à l'axe longitudinal (22) de l'élément de construction déplaçable axialement (3) et de l'écrou (5).
